# EUROPÄISCHE PATENTANMELDUNG

(11) **EP 2 060 972 A2**
(43) Veröffentlichungstag der Anmeldung: **20.05.2009**
(21) Anmeldenummer: 08019614.0
(22) Anmeldetag: 10.11.2008
(51) Int. Cl.: G06F 3/06

(54) **Verfahren zum Zugriff auf einen Massenspeicher eines tragbaren Datenträgers und tragbarer Datenträger**

(30) Priorität: 16.11.2007 DE 102007054841
(71) Anmelder: Giesecke & Devrient GmbH, 81677 München (DE)
(72) Erfinder: Stocker, Thomas, 81739 München (DE); Götze, Frank, 81929 München (DE)

(57) **Zusammenfassung**

Die Erfindung betrifft ein Verfahren zum Zugriff auf einen Massenspeicher (20) eines tragbaren Datenträgers (1). Der Zugriff auf den Massenspeicher (20) erfolgt von einem Hauptcomputer (2) aus unter Kontrolle eines auf dem tragbaren Datenträger (1) vorgesehenen Zugriffsmechanismus eines Datensystems (13), insbesondere eines ISO-Datensystems (13). Der Massenspeicher (20) wird in eine oder mehrere logische Einheiten (21) unterteilt, die virtuell einer Dateistruktur des Datensystems (13) zugeordnet werden.

## Beschreibung

Die Erfindung betrifft ein Verfahren zum Zugriff auf einen Massenspeicher eines tragbaren Datenträgers sowie einen tragbaren Datenträger.

Der Zugriff auf den Massenspeicher des tragbaren Datenträgers erfolgt üblicherweise über einen Hauptcomputer (Host), mit dem der tragbare Datenträger verbunden ist. Nach Herstellung der Verbindung des tragbaren Datenträgers mit dem Hauptcomputer wird der Massenspeicher z.B. als eigenes Laufwerk in einem Dateisystem des Hauptcomputers abgebildet. Vom Hauptcomputer aus kann dann der Massenspeicher mit Daten beschrieben werden oder es können Daten aus dem Massenspeicher ausgelesen werden. Ein tragbarer Datenträger im Sinne der vorliegenden Beschreibung kann insbesondere eine Chipkarte (Smartcard) oder ein tragbarer Massenspeicher, wie z.B. eine ST-Karte oder ein Memory Stick, in unterschiedlichen Bauformen sein. Eine weit verbreitete Schnittstelle zum Anschließen des tragbaren Datenträgers an den Hauptcomputer ist die USB (Universal Serial Bus)-Schnittstelle.

Um einen Zugriffsschutz auf die in dem Massenspeicher hinterlegten Daten bereitstellen zu können, sind Programme bekannt, die auf dem Hauptcomputer ausgeführt werden. Das Ausführen eines solchen Schutz-Programms kann beispielsweise dynamisch nach dem Feststellen einer Verbindung des tragbaren Datenträgers mit dem Hauptcomputer erfolgen. Ein derartiger Schutzmechanismus ist jedoch leicht umgehbar.

Aus der WO 2005/022405 ist ferner bekannt, in ein Dateisystem, insbesondere ein Linux-Dateisystem, ein transaktionsbasiertes Dateisystem einzubinden, um die für das eingebundene transaktionsbasierte Dateisystem bestehenden Sicherheitsmechanismen für Daten nutzen zu können, die in das transaktionsbasierte Dateisystem eingespeichert sind. Ein solches transaktionsbasiertes Dateisystem ist beispielsweise ein journalführendes Dateisystem (Journaling File System). Bei einem solchen Dateisystem werden die in das Dateisystem zu schreibenden Datenblöcke zunächst in ein Journal aufgenommen. Erst wenn dieser Vorgang erfolgreich abgeschlossen ist, erfolgt das eigentliche Schreiben in das Dateisystem. Ein Nachteil des in dieser Druckschrift beschriebenen Vorgehens besteht darin, dass die zu schützenden Daten grundsätzlich im Speicher des transaktionsbasierten Dateisystems hinterlegt werden müssen.

Es ist daher Aufgabe der vorliegenden Erfindung, ein Vorgehen für den Zugriff auf einen Massenspeicher eines tragbaren Datenträgers anzugeben, welches auf einfache Weise einen zuverlässigen Schutz der in einem Massenspeicher hinterlegten Daten ermöglicht.

Erfindungsgemäß wird diese Aufgabe durch ein Verfahren gemäß Patentanspruch 1, einen tragbaren Datenträger gemäß Patentanspruch 11 sowie ein Computerprogrammprodukt gemäß Patentanspruch 14 gelöst. In den abhängigen Patentansprüchen sind jeweils bevorzugte Ausgestaltungen der Erfindung wiedergegeben.

Die Erfindung geht von der Grundüberlegung aus, auf den Massenspeicher unter Verwendung bekannter Sicherheitsmechanismen eines Dateisystems, insbesondere eines ISO-Dateisystems, zuzugreifen. Ein Zugriff auf den Massenspeicher unter Umgehung des Zugriffsmechanismus des Dateisystems ist damit nicht mehr möglich, womit die in dem Massenspeicher hinterlegten Daten gegen ungewollten Zugriff auf einfache und effiziente Weise geschützt sind.

Das Verfahren zum Zugriff auf einen Massenspeicher eines tragbaren Datenträgers zeichnet sich dadurch aus, dass der Zugriff auf den Massenspeicher von einem Hauptcomputer aus unter Kontrolle eines auf dem tragbaren Datenträger vorgesehenen Zugriffsmechanismus eines Dateisystems, insbesondere eines ISO-Dateisystems erfolgt und der Massenspeicher in eine oder mehrere logische Einheiten unterteilt wird, die virtuell einer Dateistruktur des Dateisystems zugeordnet werden. Unter dem im vorliegenden Dokument verwendeten Begriff der "Dateistruktur" ist insbesondere jede hierarchische Struktur des Dateisystems zu verstehen, die Verzeichnisse und Dateien aufzunehmen vermag. Die Sicherheit wird dadurch hergestellt, dass die logischen Einheiten des Massenspeichers virtuell der Dateistruktur des Dateisystems zugeordnet werden (sog. mapping), wodurch die betreffenden logischen Einheiten des Massenspeichers virtueller Bestandteil des dem Zugriffsmechanismus unterliegenden Dateisystems werden. Der Massenspeicher ist damit über die Zugriffsmechanismen des Dateisystems, insbesondere des bekannten ISO-Dateisystems (ISO File System), geschützt.

Vorzugsweise werden hierzu die logischen Einheiten jeweils einer oder mehreren Dateien in der Dateistruktur des Dateisystems zugeordnet. Die Zuordnung der logischen Einheiten zu der Dateistruktur des Dateisystems kann in einer bevorzugten Ausgestaltung unter Verwendung der Mechanismen des bekannten ISO-Dateisystems erfolgen. Dies kann beispielsweise softwaremäßig erfolgen.

Die Zuordnung der logischen Einheiten des Massenspeichers zu der Dateistruktur des Dateisystems und die Verwendung der Zugriffsmechanismen des Dateisystems ermöglichen den Zugriff auf den Massenspeicher von dem Hauptcomputer aus nur nach einer Authentifizierung gegenüber dem Dateisystem. Der Zugriff auf den Massenspeicher erfolgt gemäß einer zweckmäßigen Ausgestaltung von dem Hauptcomputer aus über eine erste Schnittstelle des Datenträgers, während die Authentifizierung über eine zweite Schnittstelle des Datenträgers vorgenommen wird. Ein entsprechender Datenträger verfügt damit über zwei Schnittstellen, von denen eine vorzugsweise über das bekannte ISO-Protokoll ansprechbar ist, um die für die Authentifizierung notwendigen Daten übertragen zu können. Nach einer erfolgten Authentifizierung werden die in dem Massenspeicher hinterlegten Daten über die andere Schnittstelle, z.B. eine USB-Schnittstelle, mit dem Hauptcomputer ausgetauscht. Hierbei können je nach erfolgter Authentifizierung sowohl Daten geschrieben und/ oder gelesen werden.

Im Falle einer nicht erfolgreichen Authentifizierung ist vorgesehen, einen Zugriff auf den Massenspeicher zu verweigern. Liegt eine Authentifizierung nicht vor, so kann beispielsweise über die erste Schnittstelle eine Meldung der Art ausgegeben werden, dass mit dem Hauptcomputer kein Medium, d.h. kein Massenspeicher, verbunden ist. Vom Hauptcomputer aus erscheint damit der tragbare Datenträger als nicht vorhanden bzw. nicht verbunden.

Das erfindungsgemäße Verfahren ermöglicht ferner eine kaskadierte Zugriffsfreigabe, indem der Umfang des Zugriffs auf den Massenspeicher in Abhängigkeit der Authentifizierung festgelegt wird. Ferner kann vorgesehen sein, dass der Zugriff auf den Massenspeicher in Abhängigkeit der Authentifizierung selektiv für bestimmte der logischen Einheiten ermöglicht wird. Es kann weiter eine jeweilige Authentifizierung für eine oder mehrere der folgenden Zugriffsarten durch den Hauptcomputer vorgesehen sein: ein Erkennen des Vorhandenseins des Massenspeichers; ein Zugriff durch Lesen auf den Massenspeicher; einen Zugriff durch Lesen und/ oder Schreiben auf den Massenspeicher. Die kaskadierte Zugriffsfreigabe ermöglicht es beispielsweise, dass der Massenspeicher nach Verbindung mit dem Hauptcomputer zwar sichtbar wird, ein tatsächlicher Zugriff durch Schreiben und/ oder Lesen aber eine weitere oder mehrere weitere Authentisierungen gegenüber dem Dateisystem erfordert. Hierbei können zunächst auch nur bestimmte logische Einheiten des Massenspeichers für einen Zugriff freigegeben werden, während der Zugriff auf andere logische Einheiten weitere Authentifizierungen gegenüber dem Dateisystem erfordert.

Das ISO-Dateisystem ermöglicht eine Mehrzahl an Sicherungsstufen. So kann die Authentisierung beispielsweise unter Verwendung einer PIN (Private Identitiy Number) oder einer erfolgten Schlüsselauthentisierung erfolgen, wobei bei letzterer eine, insbesondere symmetrische, Public Key-Infrastruktur (PKI) zur Verwendung kommt.

Ein erfindungsgemäßer Datenträger, insbesondere ein tragbarer Datenträger, umfasst einen Massenspeicher, der in eine oder mehrere logische Einheiten unterteilt ist. Es ist eine erste Steuerungseinheit für den Zugriff auf den Massenspeicher von einem Hauptcomputer aus vorgesehen. Der Datenträger umfasst ferner eine zweite Steuerungseinheit mit einem darin implementierten Zugriffsmechanismus und einer Dateistruktur, welcher die logischen Einheiten des Massenspeichers zugeordnet sind. Die zweite Steuerungseinheit ist dazu ausgebildet, den Zugriff auf die logischen Einheiten des Massenspeichers durch die erste Steuerungseinheit zu kontrollieren. In einer besonderen Ausgestaltung enthält die zweite Steuerungseinheit Programmbefehle, welche die zweite Steuerungseinheit zur Durchführung eines erfindungsgemäßen Verfahrens veranlassen.

Der erfindungsgemäße Datenträger kann eine Chipkarte, insbesondere eine SIM (Subscriber Identity Module)-Karte für ein Mobilfunkgerät oder ein USB-Speicher sein. Beispielsweise können in der Praxis die SIM-Karten durch Netzbetreiber jeweiliger Kommunikationsnetze verwaltet werden, indem diese durch geeignete zusätzliche Authentifizierungen bestimmte logische Einheiten des Massenspeichers freigeben oder mit neuen Informationen belegen.

Mit der Erfindung wird der Schutz eines Massenspeichers bereitgestellt, bei dem insbesondere ein ISO-Dateisystem einen etablierten Zugriffsschutz zur Verfügung stellt, der mit geringem Aufwand auf einen Massenspeicher übertragen ist.

Von der Erfindung ist ferner ein Computerprogrammprodukt umfasst, welches maschinenlesbare Programmbefehle für die zweite Steuerungseinheit des Datenträgers aufweist, die diese zur Ausführung eines erfindungsgemäßen Verfahrens veranlassen. Das erfindungsgemäße Computerprogrammprodukt kann ein körperliches Medium mit gespeicherten Programmbefehlen sein, beispielsweise ein Halbleiterspeicher, eine Diskette oder eine CD-ROM. Das Computerprogrammprodukt kann jedoch auch ein nichtkörperliches Medium sein, beispielsweise ein über ein Computernetzwerk übermitteltes Signal.

Die Erfindung wird nachfolgend weiter anhand eines Ausführungsbeispiels beschrieben. Es zeigen:
- Fig.1: eine schematische Darstellung eines erfindungsgemäßen Datenträgers, der mit einem Hauptcomputer verbunden ist,
- Fig. 2: eine schematische Darstellung eines erfindungsgemäßen Datenträgers, und
- Fig. 3: eine schematische Darstellung eines ISO-Dateisystems, dem logische Einheiten eines Massenspeichers virtuell zugeordnet sind.

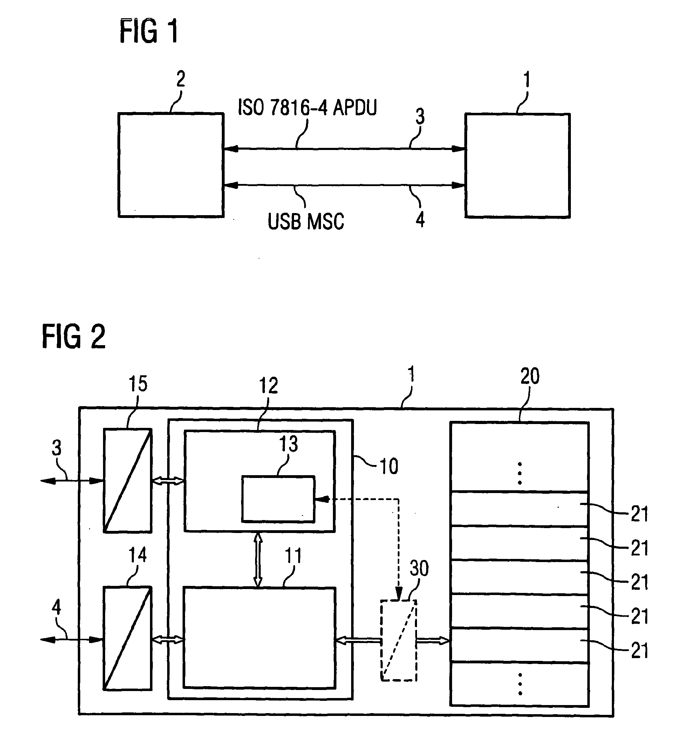

Fig.1 zeigt in einer schematischen Darstellung einen erfindungsgemäßen tragbaren Datenträger 1, der über zwei Kommunikationsverbindungen 3 und 4 mit einem Hauptcomputer 2, einem sog. Host, verbunden ist. Die erste Kommunikationsverbindung 3 basiert vorzugsweise auf dem Standard ISO 7816-4. Gemäß dem Datenübertragungsprotokoll der ISO 7816-4 werden Daten gemäß APDU (Application Protocol Data Unit) zwischen dem tragbaren Datenträger 1 und dem Hauptcomputer 2 ausgetauscht. Eine detaillierte Beschreibung des Datenaustauschs zwischen dem Datenträger 1 und dem Hauptcomputer 2 unter Verwendung von APDUs kann dem Buch "Handbuch der Chipkarten" von Wolfgang Rankl und Wolfgang Effing, Hanser Verlag, 4. Auflage, 2002, in dem Kaptitel 6.5, Seite 429 ff. entnommen werden. Auf diese Fundstelle wird Bezug genommen. Die zweite Kommunikationsverbindung 4 basiert auf dem USB (Universal Serial Bus)-Protokoll. Als Schnittstelle wird beispielsweise MSC (Mass Storage Command) verwendet. Informationen zum USB-Protokoll sind ebenfalls dem oben genannten Buch auf Seite 428 entnehmbar.

Unter Bezugnahme auf Fig. 2 wird nun der Aufbau des erfindungsgemäßen Datenträgers 1 näher erläutert. Der Datenträger 1 umfasst eine erste Steuerungseinheit 11 (USB-Controller) zur Steuerung einer ersten Schnittstelle 14 (USB-MSC) der Kommunikationsverbindung 4. Der Datenträger 1 umfasst ferner eine zweite Steuerungseinheit 12 zur Steuerung einer zweiten Schnittstelle 15 (APDU) der Kommunikationsverbindung 3 gemäß ISO 7816-4, welche auch als Smartcard Controller bezeichnet wird. Die zweite Steuerungseinheit 12 umfasst einen Speicher für ein Dateisystem 13, welches als ISO-Dateisystem (ISO File System) ausgebildet ist. Die zweite Steuerungseinheit 12 verfügt in dieser Ausgestaltung über Zugriffsmechanismen für eine in dem Dateisystem 13 ausgebildete Dateistruktur. Die erste und die zweite Steuerungseinheit 11, 12 stehen in Kommunikationsverbindung zueinander und können beispielsweise auf einem gemeinsamen Chip 10 ausgebildet sein.

Ein Zugriff auf die in dem Massenspeicher 20 enthaltenen Daten oder einzuschreibenden Daten erfolgt prinzipiell über die erste Steuerungseinheit 11, wie dies beispielsweise von USB-Speichern (Memory Sticks) oder ST-Karten bekannt ist. Um einen Schutz für die in dem Massenspeicher 20 enthaltenen Daten bereitzustellen ist bei dem Datenträger 1 vorgesehen, den Massenspeicher 20 über die in dem Dateisystem 13 enthaltenen Zugriffsmechanismen zu schützen. Hierzu wird der Massenspeicher 20 in logische Einheiten 21 unterteilt. Bei der in Fig. 2 gezeigten gemeinsamen Ausbildung der ersten und zweiten Steuerungseinheiten 11,12 auf einem Chip 10 kann dies softwaremäßig geschehen. Durch die Zuordnung der logischen Einheiten 21 des Massenspeichers 20 zu der Dateistruktur des Dateisystems 13 erfolgt eine Zugriffskontrolle über die zweite Steuerungseinheit 12, den Smartcard-Controller.

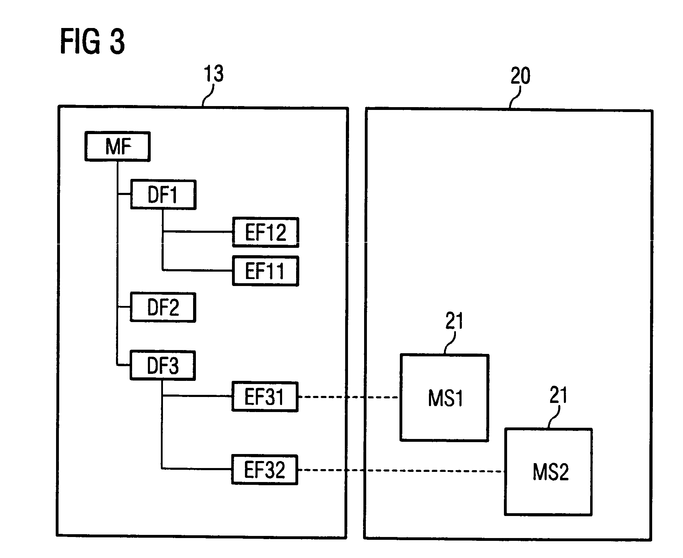

Die Zugriffskontrolle erfolgt dadurch, dass die logischen Einheiten 21 virtuell jeweils einer oder mehreren Dateien der Dateistruktur des Dateisystems 13 der zweiten Steuerungseinheit 12 zugeordnet werden. Dies ist schematisch in Fig. 3 dargestellt. Dort ist in dem mit Bezugszeichen 13 gekennzeichneten Kasten exemplarisch ein ISO-Dateisystem mit einer Dateistruktur dargestellt. Die Dateistruktur umfasst eine beispielhafte hierarchische Strukturierung von Verzeichnissen MF, DF1, DF2, DF3 in beispielhaft zwei unterschiedlichen Ebenen und Dateien EF11, EF12, EF31 und EF32 in einer dritten Ebene. Die Organisation einer Dateistruktur in einem ISO-Dateisystems ist in dem oben bezeichneten Buch in Kapitel 5.6, Seite 256 ff. ausführlich beschrieben, worauf Bezug genommen wird. In dem in Fig. 3 gezeigten Ausführungsbeispiel ist eine mit MS1 bezeichnete logische Einheit 21 der Datei EF31 in dem Verzeichnis DF3 zugeordnet. Korrespondierend hierzu ist eine mit MS2 gekennzeichnete logische Einheit 21 der Datei EF32 virtuell zugeordnet.

In einer alternativen Ausgestaltung könnten mehrere oder alle logische Einheiten 21 einer einzigen Datei der Dateistruktur des Dateisystems 13 zugeordnet werden. Die Zuordnung ist prinzipiell beliebig wählbar und wird durch die zweite Steuerungseinheit 12, den Smartcard-Controller, vorgenommen.

Wird ein erfindungsgemäßer Datenträger 1, z.B. eine ST-Karte, ein Memory Stick, eine SIM-Karte oder dergleichen, mit dem Hauptcomputer 2 verbunden, so gibt sich der Massenspeicher 20 gegenüber dem Hauptcomputer stets als Wechselspeicher ("Removable Device") aus. Dies ist in Fig. 2 durch eine virtuelle Schnittstelle 30 zwischen der ersten Steuerungseinheit 11 und dem Massenspeicher 20 angedeutet. Ein Zugriff auf den Massenspeicher 20 über die erste Steuerungseinheit 11 von dem Hauptcomputer 2 aus wird nur zugelassen, wenn sich der Zugreifende zuvor über die zweite Steuerungseinheit 12 gegenüber dem ISO-Dateisystem authentifiziert hat. Durch die Authentifizierung gegenüber einzelnen Dateien der Dateistruktur des Dateisystems 13 wird der ersten Steuerungseinheit 11 über die virtuelle Schnittstelle 30 ein Zugriff auf die der betreffenden Datei zugeordneten logischen Einheiten 21 ermöglicht. Die Authentifizierung kann beispielsweise durch eine PIN (Personal Identity Number) erfolgen. Anschaulich bedeutet dies, eine Speicherkarte in ein Kartenlesegerät zu stecken, wobei die Speicherkarte virtuell erst dann als gesteckt oder mit dem Kartenlesegerät verbunden gilt, nachdem eine Authentisierung erfolgt ist.

Liegt eine Authentisierung nicht vor, so wird über die erste Steuerungseinheit gegenüber dem Hauptcomputer 2 der Massenspeicher 20 als nicht vorhanden ausgegeben.

Nach einer erfolgreichen Authentifizierung gegenüber dem ISO-Dateisystem 13 wird der Zugriff durch den Hauptcomputer 2 auf den Massenspeicher 20 freigegeben. Hierbei kann eine kaskadierte Zugriffsfreigabe vorgesehen sein, indem zunächst der Massenspeicher 20 für den Hauptcomputer 2 zwar sichtbar wird, für einen Lese- und/ oder Schreibzugriff jedoch eine weitere Authentisierung gegenüber dem ISO-Dateisystem 13 erforderlich sein kann. Der Zugriffsmechanismus der ISO-Dateisystems 13 erlaubt es z.B. ferner, zunächst nur bestimmte der logischen Einheiten 21 des Massenspeichers 20 für einen Zugriff freizugeben. Der Zugriff auf weitere der logischen Einheiten 21 könnte dann erst nach weiteren Authentifizierungen gegenüber den betreffenden Dateien des ISO-Dateisystems 13 erfolgen.

Das ISO-Dateisystem 13 ermöglicht verschiedene Sicherungsstufen. So kann auf bestimmte Dateien der Dateistruktur kein Zugriff möglich sein. Es kann vorgesehen sein, dass ein Zugriff auf eine Datei und damit die zugeordneten logischen Einheiten 21 nach erfolgter PIN-Authentisierung möglich ist. Alternativ kann die Authentisierung durch eine Schlüssel-Authentisierung (z.B. unter Verwendung einer symmetrischen Public Key-Infrastruktur) erfolgen. Ferner kann vorgesehen sein, den logischen Einheiten 21 bestimmter Dateien der Dateistruktur lediglich einen lesenden Zugriff oder alternativ einen lesenden und schreibenden Zugriff zu ermöglichen. In einer weiteren Ausgestaltung der Erfindung könnte ferner vorgesehen sein, dass aufgrund der Zuordnung (Mapping) der Dateien der Dateistruktur zu den logischen Einheiten 21 die Möglichkeit vorgesehen wird, auch über diese Dateien auf den Speicher zuzugreifen. In diesem Fall ist zu berücksichtigen, dass ein Zugriff "Low-Level" erfolgen kann und eine etwaige Formatierung des Massenspeichers, z.B. FAT (File Assistent), zu berücksichtigen ist.

## Patentansprüche

1. Verfahren zum Zugriff auf einen Massenspeicher (20) eines tragbaren Datenträgers (1), **dadurch gekennzeichnet, dass**
- der Zugriff auf den Massenspeicher (20) von einem Hauptcomputer (2) aus unter Kontrolle eines auf dem tragbaren Datenträger (1) vorgesehenen Zugriffsmechanismus eines Dateisystems (13), insbesondere eines ISO-Dateisystems (13), erfolgt, und
- der Massenspeicher (20) in eine oder mehrere logische Einheiten (21) unterteilt wird, die virtuell einer Dateistruktur des Dateisystems (13) zugeordnet werden.

2. Verfahren nach Anspruch 1, **dadurch gekennzeichnet, dass** die logischen Einheiten (21) jeweils einer oder mehreren Dateien (MF, DF1, DF2, DF3, EF11, EF12, EF31, EF32) in der Dateistruktur des Dateisystems zugeordnet werden.

3. Verfahren nach Anspruch 1 oder 2, **dadurch gekennzeichnet, dass** die Zuordnung der logischen Einheiten (21) zu der Dateistruktur unter Verwendung der Mechanismen des ISO-Dateisystems (13) erfolgt.

4. Verfahren nach einem der vorherigen Ansprüche, **dadurch gekennzeichnet, dass** ein Zugriff auf den Massenspeicher (20) von dem Hauptcomputer (2) aus nur nach einer Authentifizierung gegenüber dem Dateisystem ermöglicht wird.

5. Verfahren nach Anspruch 4, **dadurch gekennzeichnet, dass** der Zugriff auf den Massenspeicher (20) von dem Hauptcomputer (2) aus über eine erste Schnittstelle (14) des Datenträgers (1) und die Authentifizierung über eine zweite Schnittstelle (15) des Datenträgers (1) erfolgt.

6. Verfahren nach Anspruch 4, **dadurch gekennzeichnet, dass** bei einer nicht erfolgreichen Authentifizierung ein Zugriff auf den Massenspeicher (20) verweigert wird.

7. Verfahren nach einem der Ansprüche 4 bis 6, **dadurch gekennzeichnet, dass** ein Umfang des Zugriffs auf den Massenspeicher (20) in Abhängigkeit der Authentifizierung festgelegt wird.

8. Verfahren nach einem der Ansprüche 4 bis 7, **dadurch gekennzeichnet, dass** der Zugriff auf den Massenspeicher (20) in Abhängigkeit der Authentifizierung selektiv für bestimmte der logischen Einheiten (21) ermöglicht wird.

9. Verfahren nach einem der Ansprüche 4 bis 8, **dadurch gekennzeichnet, dass** eine jeweilige Authentifizierung für eine oder mehrere der folgenden Zugriffsarten durch den Hauptcomputer (2) vorgesehen ist:
- ein Erkennen des Vorhandenseins des Massenspeichers (20);
- einen Zugriff durch Lesen auf den Massenspeicher (20);
- einen Zugriff durch Lesen und/ oder Schreiben auf den Massenspeicher (20).

10. Verfahren nach einem der Ansprüche 4 bis 9, **dadurch gekennzeichnet, dass** die Authentifizierung durch eine PIN-Authentifizierung oder durch eine Schlüsselauthentifizierung unter Verwendung einer Public Key Infrastruktur erfolgt.

11. Datenträger, insbesondere tragbarer Datenträger (1), mit
- einem Massenspeicher (20), der in eine oder mehrere logische Einheiten (21) unterteilt ist,
- einer ersten Steuerungseinheit (11) für den Zugriff auf den Massenspeicher (20) von einem Hauptcomputer (2),
- einer zweiten Steuerungseinheit (12) mit einem darin implementierten Zugriffsmechanismus und einer Dateistruktur, welcher die logischen Einheiten (21) des Massenspeichers (20) zugeordnet sind,
wobei die zweite Steuerungseinheit (12) dazu ausgebildet ist, den Zugriff auf die logischen Einheiten (21) des Massenspeichers (20) durch die erste Steuerungseinheit (11) zu kontrollieren.

12. Datenträger nach Anspruch 11, **dadurch gekennzeichnet, dass** die zweite Steuerungseinheit (12) Programmbefehle enthält, welche die zweite Steuerungseinheit (12) zur Durchführung des Verfahrens nach einem der Ansprüche 2 bis 10 zu veranlassen.

13. Datenträger nach Anspruch 11 oder 12, **dadurch gekennzeichnet, dass** dieser eine Chipkarte, insbesondere eine SIM-Karte, oder ein USB-Speicher ist.

14. Computerprogrammprodukt, das maschinenlesbare Programmbefehle für eine Steuerungseinheit eines Datenträgers (1) aufweist, die diese zur Ausführung eines Verfahrens nach einem der Ansprüche 1 bis 10 veranlassen.
